# EUROPEAN PATENT APPLICATION

(11) **EP 4 589 854 A1**
(43) Date of publication of application: **23.07.2025**
(21) Application number: 24869429.1
(22) Date of filing: 01.07.2024
(51) Int. Cl.: H04B 7/0413, H04B 7/08, H01M 10/42, H02J 7/00, H01Q 3/30

(54) **BATTERY SYSTEM, BATTERY PACK USING THE SAME AND BATTERY PACK MONITORING METHOD**

(30) Priority: 06.11.2023 KR 20230151461; 02.04.2024 KR 20240044701
(71) Applicant: LG Energy Solution Ltd., 07335 Seoul (KR)
(72) Inventor: HA, Jeongwan, Yuseong-g, Daejeon, 34122 (KR); Choi, Wonjae, Yuseong-g, Daejeon, 34122 (KR); LEE, Yongseok, Yuseong-g, Daejeon, 34122 (KR)
(74) Representative: Hoffmann Eitle
(86) International application number: PCT/KR2024/009194
(87) International publication number: WO 2025/100674

(57) **Abstract**

Disclosed are a battery system, a battery pack embedded with the same, and a battery pack monitoring method using the same, and the battery system according to an exemplary embodiment of the present invention may include: a battery module; a slave battery management system (BMS) including an antenna, connected to the battery module, sensing a state of the battery module and generating sensing information, and transmitting the sensing information through the antenna as a wireless signal; and a master BMS including multiple antennas, receiving the wireless signal through the multiple antennas as a plurality of wireless signals, adjusting phases for the plurality of wireless signals and generating a plurality of first wireless signals having the same phase, synthesizing the plurality of first wireless signals and generating a second wireless signal, obtaining the sensing information by using the second wireless signal, and controlling the battery module by using the obtained sensing information.

## Description

### [Technical Field]

### CROSS-REFERENCE TO RELATED APPLICATION

This application claims priority to and the benefit of Korean Patent Application No. 10-2023-0151461 filed in the Korean Intellectual Property Office on November 6, 2023, and Korean Patent Application No. 10-2024-0044701 filed in the Korean Intellectual Property Office on April 2, 2024, the entire contents of which are incorporated herein by reference.

The present invention relates to a battery system, a battery pack embedded with the same, and a battery pack monitoring method using the same.

### [Background Art]

For medium and large battery packs used for battery packs, especially for cars and ESSs, multiple battery modules may be included. Such multiple battery modules have a multi-module structure in which the multiple battery modules are connected to each other in series and/or parallel to increase a capacity and/or an output of the battery pack.

A multi-structure battery pack can be implemented in various forms depending on circuit logic or PCB configuration. In this case, a battery management system (BMS) primarily adopts a multi-slave structure in order to enhance efficiency of monitoring and control. The multi-slave structure is configured to allow a plurality of slave BMSs to be in charge of a plurality of battery modules constituting the battery pack, respectively, and allow a master BMS to integratively control the plurality of slave BMSs.

A wired communication mode is used between the master BMS and the plurality of slave BMSs inside the battery pack in the related art, but there are many problems including a complicated communication line, etc. Therefore, in recent years, there have been many attempts of using a wireless communication method for communication between the master BMS and the plurality of slave BMSs inside the battery pack.

On the other hand, inside the battery pack, an internal space of the pack is narrow due to the heat transfer performance improvement design of various components and battery cells, and a free space of the wireless communication side is insufficient, resulting in increasing attenuation of signals, so a reception sensitivity is lowered, and in a severe case, a shaded zone occurs and the reliability is lowered.

Therefore, a measure is needed to secure wireless communication reliability in a narrow space due to lack of free space inside the battery pack.

### [Disclosure]

### [Technical Problem]

The present invention attempts to provide a battery system, a battery pack embedded with the same, and a battery pack monitoring method using the same, which have enhanced reliability of wireless communication between a slave BMS and a master BMS.

### [Technical Solution]

An exemplary embodiment of the present invention provides a battery system which may include: a battery module; a slave battery management system (BMS) including an antenna, connected to the battery module, sensing a state of the battery module and generating sensing information, and transmitting the sensing information through the antenna as a wireless signal; and a master BMS including multiple antennas, receiving the wireless signal through the multiple antennas as a plurality of wireless signals, adjusting phases for the plurality of wireless signals and generating a plurality of first wireless signals, synthesizing the plurality of first wireless signals and generating a second wireless signal, obtaining the sensing information by using the second wireless signal, and controlling the battery module by using the obtained sensing information.

The plurality of first wireless signals may have the same phase.

The master BMS may further include a phase shifter adjusting, based on a phase of a wireless signal received by any one antenna among the antennas of the multiple antennas, phases of a plurality of wireless signals received by the remaining antennas to generate the plurality of first wireless signals.

The master BMS may further include a phase shifter generating the plurality of first wireless signals by adjusting the phases for the plurality of wireless signals based on a predetermined reference phase.

The master BMS may further include a signal synthesizer receiving the plurality of first wireless signals, synthesizing the plurality of first wireless signals to generate a second wireless signal, and transmitting the second wireless signal to a controller.

When there are the plurality of slave BMSs, the master BMS may further include a signal synthesizer separately synthesizing the plurality of first wireless signals for each slave BMS.

Another exemplary embodiment of the present invention provides a battery pack embedded with a battery system, which may include: a housing accommodating a plurality of battery modules and a plurality of slave BMSs; multiple antennas including a plurality of antennas disposed at different positions with respect to the housing; master BMS including a plurality of wireless ports, and disposed at a portion of the housing; and a plurality of connection portions wiredly connecting the plurality of antennas to the plurality of wireless ports, respectively.

The master BMS and the plurality of antennas may be disposed on one internal surface of a plate constituting one surface of the housing.

The housing may include a partition partitioning a space accommodating the plurality of battery modules.

The multiple antennas may be disposed at a portion of the partition.

The number of the plurality of antennas may be determined depending on a propagation environment inside the battery pack.

Yet another exemplary embodiment of the present invention provides a battery pack monitoring method using a battery system, which may include: sensing, by a slave BMS, a state of a battery module and generating sensing information, and transmitting the sensing information through an antenna as a wireless signal; receiving, by a master BMS, the wireless signal through multiple antennas as a plurality of wireless signals; adjusting, by the master BMS, phases for the plurality of wireless signals, and generating a plurality of first wireless signals having the same phase; synthesizing, by the master BMS, the plurality of first wireless signals to generate a second wireless signal; and obtaining the sensing information by using the second wireless signal, and controlling the battery module by using the obtained sensing information.

The generating of the first wireless signals may further include adjusting, by a phase shifter, based on a phase of a wireless signal received by any one antenna among the antennas of the multiple antennas, phases of a plurality of wireless signals received by the remaining antennas to generate the plurality of first wireless signals having the same phase, and transmitting, by the phase shifter, the plurality of first wireless signals to a signal synthesizer.

The generating of the first wireless signals may further include generating, by the phase shifter, the plurality of first wireless signals having the same phase by adjusting the phases for the plurality of wireless signals based on a predetermined reference phase, and transmitting, by the phase shifter, the plurality of first wireless signals to the signal synthesizer.

The generating of the second wireless signal may further include receiving, by the signal synthesizer, the plurality of first wireless signals, synthesizing the plurality of first wireless signals to generate the second wireless signal, and generating the second wireless signal and transmitting the generated second wireless signal to a controller.

When there are the plurality of slave BMSs, the generating of the second wireless signal may further include distinguishing the plurality of first wireless signals for each slave BMS, and synthesizing the plurality of first wireless signals distinguished for each slave BMS.

### [Advantageous Effects]

According to an exemplary embodiment of the present invention, a path loss of a transmitted/received wireless signal is minimized by removing a wireless communication shaded zone inside a battery pack through multiple antennas to enhance a reception sensitivity and enhance wireless communication reliability.

Effects which can be obtained in the present disclosure are not limited to the aforementioned effects and other unmentioned effects will be clearly understood by those skilled in the art from the following description.

### [Description of the Drawings]

FIG. 1 is a diagram schematically illustrating a configuration of a battery system according to an exemplary embodiment of the present invention.
FIGS. 2 to 4 are diagrams for describing communication between a slave BMS and a master BMS.
FIG. 5 is a block diagram of the master BMS according to an exemplary embodiment of the present invention.
FIGS. 6 and 7 are diagrams for describing a phase shifter according to an exemplary embodiment of the present invention.
FIG. 8 is a diagram for describing a signal synthesizer according to an exemplary embodiment of the present invention.
FIG. 9 is a diagram for describing enhancement of reliability of wireless communication depending on a rise of a level of a wireless reception signal.
FIG. 10 is a diagram schematically illustrating a state of a battery pack 1 embedded with a battery system according to an exemplary embodiment of the present invention.
FIG. 11 is a diagram schematically illustrating a state in which one surface of a housing is separated according to an exemplary embodiment of the present invention.
FIG. 12 is a diagram illustrating a state of the battery pack of FIG. 10 taken along line A-A'.
FIG. 13 is a cross-sectional view of the battery pack according to an exemplary embodiment of the present invention.
FIG. 14 is a diagram illustrating a state of the battery pack of FIG. 13 taken along line B-B'.
FIGS. 15 to 19 illustrate various exemplary embodiments illustrating a layout structure between multiple antennas, a master BSM, and a plurality of connection portions according to an exemplary embodiment of the present invention.
FIG. 20 is a flowchart of a method for monitoring a battery pack using a battery system according to an exemplary embodiment of the present invention.

### [Mode for Invention]

In describing an exemplary embodiment disclosed in the present invention, a detailed description of related known technologies will be omitted if it is determined that the detailed description makes the gist of the exemplary embodiment of the present invention unclear. Further, the accompanying drawings are provided for helping to easily understand exemplary embodiments disclosed in this specification, and the technical spirit disclosed in this specification is not limited by the accompanying drawings, and it will be appreciated that the present invention includes all of the modifications, equivalent matters, and substitutes included in the spirit and the technical scope of the present invention.

Terms including an ordinal number, such as first and second, are used for describing various components, but the components are not limited by the terms. The terms are used only to discriminate one component from another component.

It should be understood that, when it is described that a component is "connected to" or "accesses" another component, the component may be directly connected to or access the other component or a third component may be present therebetween. In contrast, when it is described that a component is "directly connected to" or "directly accesses" another component, it is understood that no component is present between the component and another component.

In the present invention, it should be understood that term "include" or "have" indicates that a feature, a number, a step, an operation, a component, a part or the combination thereof described in the specification is present, but does not exclude a possibility of presence or addition of one or more other features, numbers, steps, operations, components, parts or combinations thereof, in advance.

Hereinafter, the present invention will be described in detail with reference to the accompanying drawings.

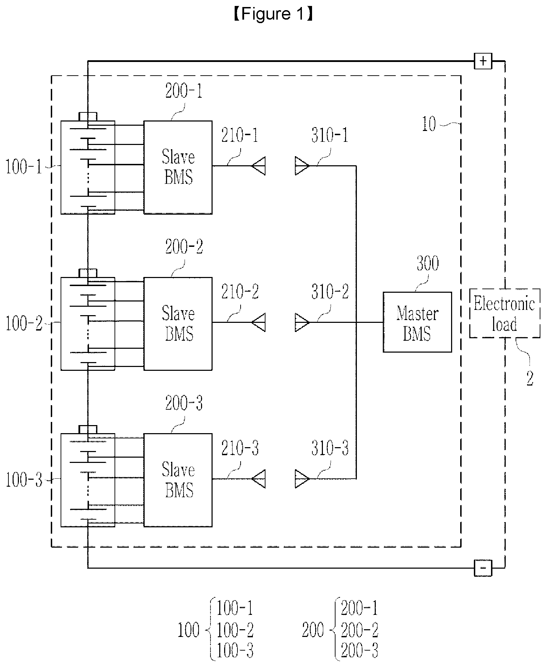

FIG. 1 is a diagram schematically illustrating a configuration of a battery system according to an exemplary embodiment of the present invention.

Referring to FIG. 1, the battery system according to an exemplary embodiment of the present invention may include a plurality of battery modules 100-1 to 100-3, a plurality of slave BMSs 200-1 to 200-3, and a master BMS 300. In FIG. 1, it is illustrated that the battery system 10 includes three slave BMSs 200-1 to 200-3 and three battery modules 100-1 to 100-3, but the present invention is not limited thereto. The battery system 10 may include one or more battery modules and one or more slave BMSs. Hereinafter, the plurality of battery modules 100-1 to 100-3 are collectively referred and described as a battery module 100, and the plurality of slave BMSs 200-1 to 200-3 are collectively referred and described as a slave BMS 200.

The battery module 100 means a battery assembly in which battery cells are bundled and put in a predetermined number in order to protect the battery cells from an external impact, heat, vibration, etc., and a plurality of battery cells included in the battery module 100 are electrically connected to each other in series and/or in parallel.

The slave battery management system (BMS) 200 includes antennas 210 (210-1, 210-2, and 210-3). The slave BMS 200 may be connected to the battery module 100, and sense state of the battery module 100 and generate sensing information, and transmit the sensing information through the antenna 210 as a wireless signal. Here, the sensing information may be information about a voltage, a current, a temperature of the battery module 100 connected to the slave BMS 200, and a plurality of cell voltages for a plurality of battery cells constituting the battery module 100, etc.

The master BMS 300 receives the wireless signal transmitted by the slave BMS200 to obtain the sensing information of the battery module 100, and perform a state of charge (SOC), a state of health (SOH), power limitation, cell balancing, trouble diagnosis, cooling control, etc. of the battery module 100 by using the obtained sensing information.

The master BMS 300 may receive the wireless signal transmitted from the slave BMS 200 as a plurality of wireless signals through multiple antennas 310 (310-1, 310-2, and 310-3), and generate a plurality of first wireless signals by adjusting phases for the plurality of wireless signals. According to an exemplary embodiment, the plurality of first wireless signals may have the same phase.

The master BMS 300 may generate a second wireless signal by synthesizing the plurality of first wireless signals having the same phase, obtain the sensing information of the battery module 100 by using the second wireless signal, and control the battery module 100 by using the obtained sensing information.

According to an exemplary embodiment, the slave BMS 200 and the master BMS 300 may transmit and receive the wireless signal through short-range wireless communication. For example, the slave BMS 200 and the master BMS 300 may transmit and receive the wireless signal through radio frequency (RF), near field communication (NFC), Bluetooth, Wi-Fi, ZigBee, etc.

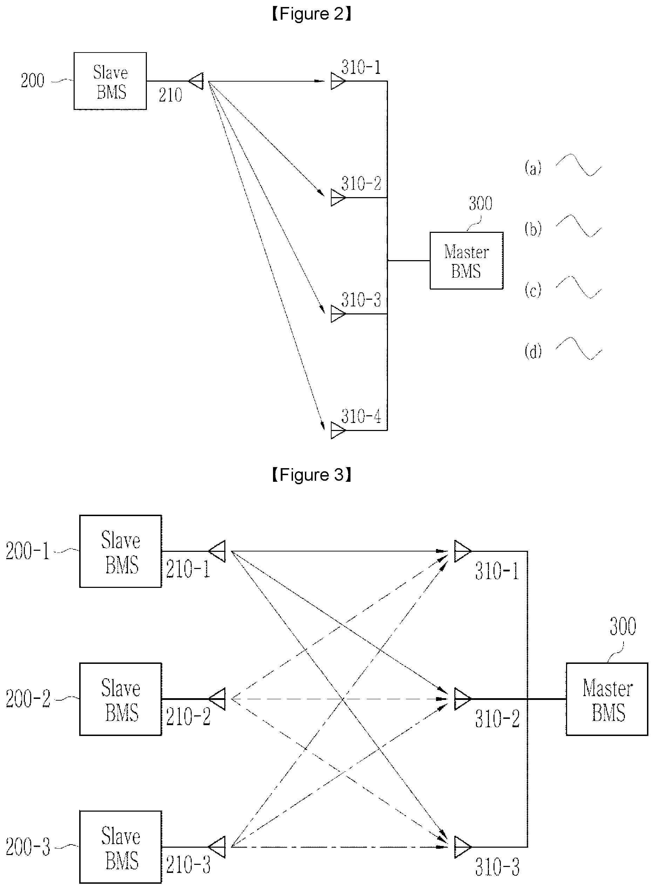

FIGS. 2 to 4 are diagrams for describing communication between a slave BMS and a master BMS.

FIG. 2 illustrates communication between one slave BMS and the master BMS. FIGS. 2A to 2D illustrate wireless signals received by a plurality of antennas 310-1, 310-2, 310-3, and 310-4 of the master BMS 300, respectively.

Referring to FIG. 2, the master BMS 300 according to an exemplary embodiment of the present invention may receive the wireless signal transmitted by the slave BMS 200 as a plurality of wireless signals through the plurality of antennas 310-1, 310-2, 310-3, and 310-4.

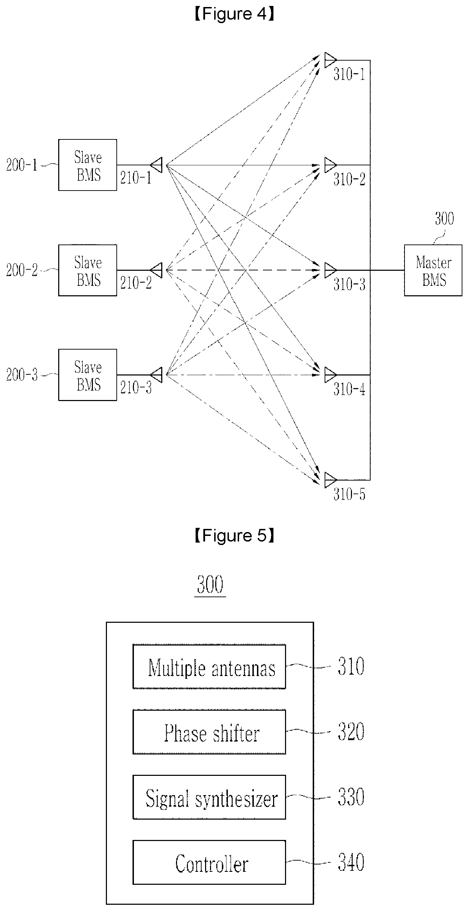

FIGS. 3 and 4 illustrate communication between a plurality of slave BMSs and the master BMS.

Referring to FIG. 3, each of the plurality of antennas 310-1, 310-2, and 310-3 of the master BMS 300 may receive wireless signals of a number which is the same as the number of the plurality of slave BMSs 200-1, 200-2, and 200-3. In this case, since the signals transmitted by the respective slave BMSs 200-1, 200-2, and 200-3 are communicated by using different frequencies, interferences between the signals transmitted by the plurality of slave BMSs 200-1, 200-2, and 200-3 do not occur.

Referring to FIGS. 3 and 4, as the number of antennas of the multiple antennas 310 increases, the number of wireless signals received by the master BMS 300 increases.

For example, as illustrated in FIG. 3, when the multiple antennas 310 include three antennas 310-1, 310-2, and 310-3, the master BMS 300 receives the wireless signal transmitted from one slave BMS 200-1 by using three antennas 310-1, 310-2, and 310-3. Therefore, when the multiple antennas 310 include three antennas, the master BMS 300 receives the wireless signal transmitted by one slave BMS 200-1 as three wireless signals.

On the other hand, as illustrated in FIG. 4, when the multiple antennas 310 include five antennas 310-1, 310-2, 310-3, 310-4, and 310-5, the master BMS 300 receives the wireless signal transmitted from one slave BMS 200-1 by using five antennas 310-1, 310-2, 310-3, 310-4, and 310-5. Therefore, when the multiple antennas 310 include five antennas, the master BMS 300 receives the wireless signal transmitted by one slave BMS 200-1 as five wireless signals.

That is, as the number of antennas of multiple antennas 310 increases, the number of wireless signals received by the master BMS 300 increases, and as the number of wireless signals received by the master BMS 300 increases, the number of signals used for signal synthesis increases, so a level of the synthesized signal increases, thereby enhancing the reliability of the wireless communication.

FIG. 5 is a block diagram of the master BMS according to an exemplary embodiment of the present invention.

Referring to FIG. 5, the master BMS 300 according to an exemplary embodiment of the present invention may further include a phase shifter 320, a signal synthesizer 330, and a controller 340 in the multiple antennas 310.

The phase shifter 320 may generate the first wireless signals by moving the phases of the plurality of wireless signals, and transmit the plurality of first wireless signals to the signal synthesizer 330.

The signal synthesizer 330 may generate a second wireless signal by synthesizing the plurality of first wireless signals, and transmit the second wireless signal to the controller 340.

The controller 340 may receive the second wireless signal, and obtain sensing information regarding the state of the battery module 100 by using the second wireless signal. Further, the controller 340 may control the battery module 100 by using the obtained sensing information.

For example, the controller 340 communicates with a control circuit that controls an operation of an electronic load 2 outside the battery pack to control charging and discharging operations of the battery system 10. The electronic load 2 may include an inverter, an on board charger (OBC), a DC-DC converter, etc. For example, when power should be supplied from the battery system 10 to the inverter, the controller 340 may close a relay providing an electrical connection between the battery system 10 and the inverter, and control the discharging operation of the battery system 10 based on sensing information for the plurality of battery modules 100.

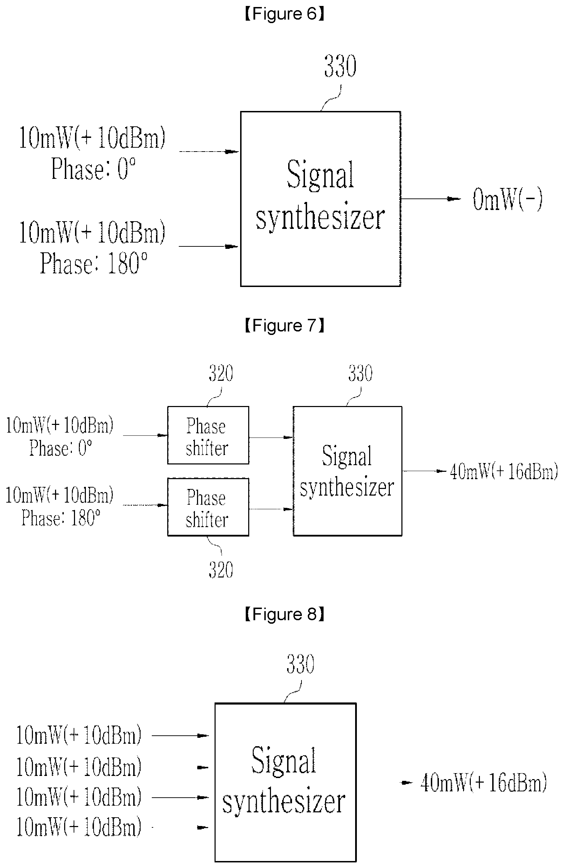

FIGS. 6 and 7 are diagrams for describing a phase shifter according to an exemplary embodiment of the present invention.

Referring to FIG. 6, when the plurality of wireless signals are synthesized without phase correction through the phase shifter 320, signals having opposite phases may be synthesized, so the level of the wireless signal may be attenuated by offset interference between signals.

Therefore, as illustrated in FIG. 7, the phase shifter 320 according to an exemplary embodiment of the present invention prevents signals from being offset by correcting the phases of the signals synthesized through the signal synthesizer 330 to prevent the level of the wireless signal from being attenuated, thereby enhancing the reliability of the wireless communication.

According to an exemplary embodiment, based on a phase of a wireless signal received by any one antenna 310-n among a plurality of antennas 310-1, 310-2, ..., 310-N of the multiple antennas 310, the phase shifter 320 adjusts phases of a plurality of wireless signals received by the remaining antennas (all except for 310-n) to generate the plurality of first wireless signals. In this case, the plurality of first wireless signals may have the same phase. For example, when the phase of the wireless signal received by any one antenna 310-1 among the multiple antennas is 180°, the phases of the remaining antennas 310-2 to 310-N may be corrected as 180°.

According to an exemplary embodiment, the phase shifter 320 adjusts the phases for the plurality of wireless signals to a predetermined reference phase to generate the plurality of first wireless signals. Here, the reference phase may be any one of 0° to 360°. For example, as illustrated in FIG. 7, the phase shifter 320 may correct all of the phases for the plurality of wireless signals to 0°.

According to an exemplary embodiment, the reference phase may be a set value stored in the phase shifter 320, or may be set and input by a user whenever the phase shifter 320 operates. In this case, the reference phase input by the user may be received from an external device such as a user terminal or an upper controller through the controller 340.

FIG. 8 is a diagram for describing a signal synthesizer according to an exemplary embodiment of the present invention.

Referring to FIG. 8, the signal synthesizer 330 according to an exemplary embodiment of the present invention receives the plurality of first wireless signals, and synthesizes the plurality of first wireless signals to generate the second wireless signal.

As illustrated in FIG. 8, the second wireless signal generated by synthesizing the plurality of first wireless signals by the signal synthesizer 330 has a signal level which increases compared to the first wireless signal.

According to an exemplary embodiment, when the battery system includes the plurality of slaves BMSs 200, the signal synthesizer 330 may distinguish and synthesize the plurality of first wireless signals for each slave BMS 200.

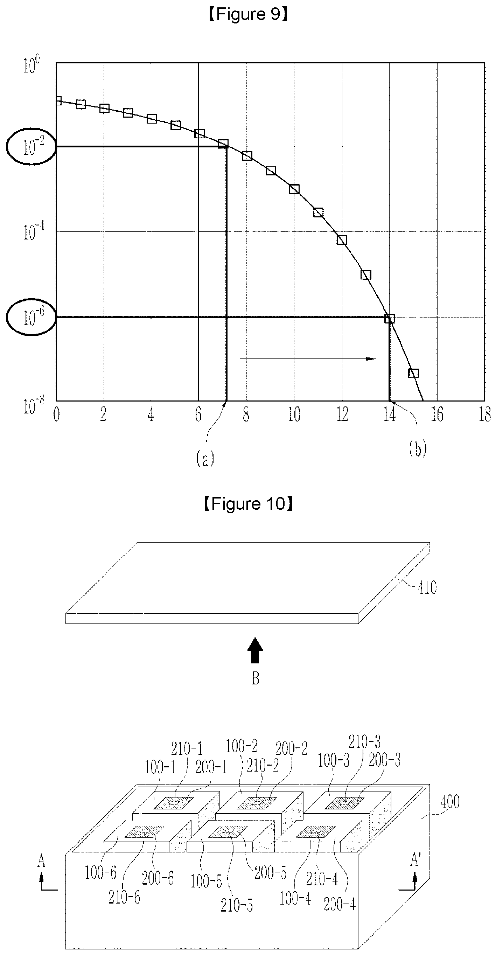

FIG. 9 is a diagram for describing enhancement of reliability of wireless communication depending on a rise of a level of a wireless reception signal.

In a graph of FIG. 9, a horizontal axis indicates a signal to noise ratio (SNR) [dB] of the wireless communication, and a vertical axis indicates an error occurrence probability of the wireless communication.

Referring to FIG. 9A, it may be confirmed that when a level of a reception signal is -80 dBm, the error occurrence probability of the wireless communication is 10-2, and referring to FIG. 9B, it may be confirmed that when the level of the reception signal is -73 dBm, the error occurrence probability of the wireless communication is 10-6.

That is, when the level of the reception signal is raised by 7 dB, a margin for an input signal increases compared to a lowest reception sensitivity, so the error occurrence probability for the wireless communication decreases as large as 10-4. Therefore, information included in a signal is excellently delivered without a distortion, so when a level of a wireless reception signal is raised, the reliability of the wireless communication is enhanced.

Hereinafter, the battery pack 1 implemented by the battery system 10 according to an exemplary embodiment of the present invention will be described with reference to FIGS. 10 to 19.

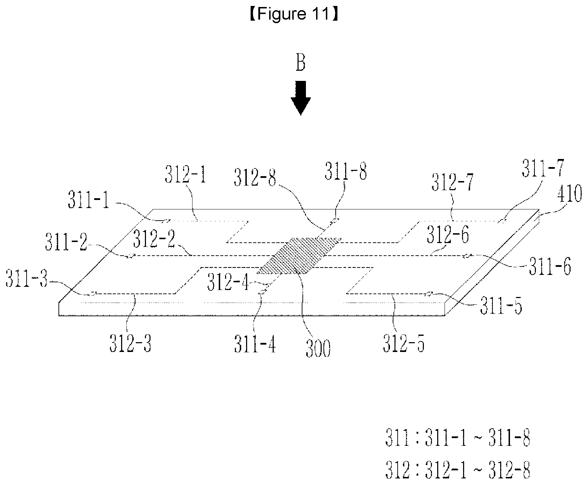

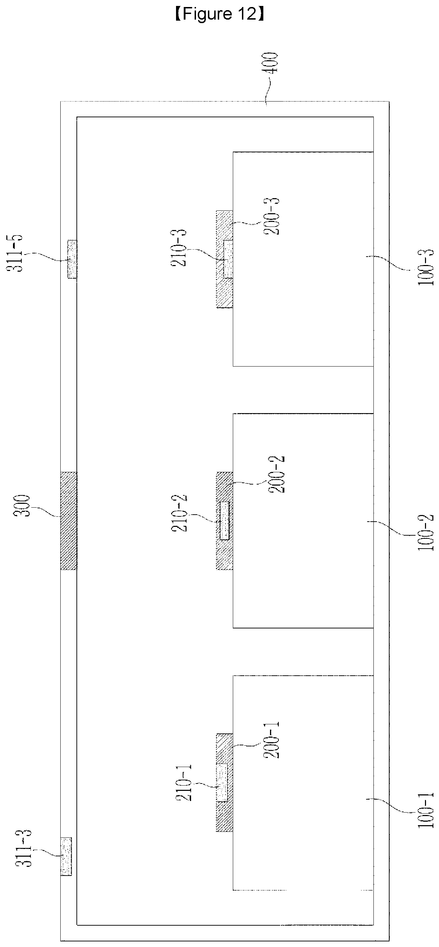

FIG. 10 is a diagram schematically illustrating a state when one plate constituting one surface of a housing is viewed in a B direction according to an exemplary embodiment of the present invention, FIG. 11 is a diagram schematically illustrating a state when one plate constituting one surface of the housing in the B direction according to an exemplary embodiment of the present invention, and FIG. 12 is a diagram schematically illustrating a state in which the battery pack of FIG. 10 is cut taken along line A-A'.

Referring to FIGS. 10 to 12, the battery pack 1 according to an exemplary embodiment of the present invention may be implemented in a form in which a plurality of battery modules 100-1 to 100-6, a plurality of slave BMSs 200-1 to 200-6, and a master BMS 300 are accommodated inside a housing 400 or disposed in the housing 400.

Referring to FIGS. 10 and 12, the housing 400 may include an internal space accommodating the plurality of battery modules 100-1 to 100-6. According to an exemplary embodiment, the housing 400 may be configured by an insulator. For example, as illustrated in FIGS. 10 to 12, the housing 400 may be implemented as a case of a rectangular parallelepiped form with a hollow therein. However, a shape and a size of the housing 400 are not limited thereto, and as necessary, may be freely changed. In FIGS. 10 to 12, it is illustrated that six battery modules 100-1 to 100-6 are accommodated in the internal space of the housing 400, but the number of battery modules 100 accommodated in the housing 400 is not limited thereto, and the number of battery modules 100 may be freely changed as necessary.

Referring to FIGS. 10 and 12, the plurality of slaves BMSs 200-1 to 200-6 may be electrically connected to the plurality of battery modules 100-1 to 100-6 accommodated in the internal space of the housing 400, respectively. Further, the antennas 210 (210-1 to 210-6) may be connected to the plurality of slave BMSs 200-1 to 200-6, respectively. According to an exemplary embodiment, the antenna 210 connected to each of the plurality of slave BMSs 200-1 to 200-6 may be positioned on one surface of each of the plurality of slave BMSs 200-1 to 200-6, and implemented to be revealed to the outside, or embedded.

Referring to FIGS. 10 to 12, the master BMS 300 and the multiple antennas 310 may be disposed on one internal surface of a plate 410 constituting one surface of the housing 400. According to an exemplary embodiment, the master BMS 300 may also be disposed on one external surface of the plate 410 constituting one surface of the housing 400. In this case, the master BMS 300 may be disposed on an external surface in a direction facing the plurality of slave BMSs 200-1 to 200-6, or the antenna 210.

It is illustrated that the plate 410 constitutes an upper surface of the housing, and the master BMS 300 is embedded and installed in the plate 410 in FIGS. 10 to 12, but a position at which the master BMS 300 is disposed with respect to the housing 400 is not limited thereto, and may be freely changed as necessary.

For example, the master BMS 300 may be disposed on an internal surface or an external surface of the plate 410. In this case, the plate 410 may constitute an external surface in a direction facing the antenna 210 connected to each of the plurality of slave BMSs 200-1 to 200-6 among external surfaces included in the housing 400. Alternatively, the master BMS 300 may also be disposed outside the housing 400. Alternatively, the master BMS 300 may also be disposed on an outer surface or an inner surface of the housing 400.

The master BMS 300 may include a plurality of wireless ports, and may be disposed at a portion of the housing 400. In this case, a portion of the housing 400 at which the master BMS 300 is disposed may be one internal surface or an internal space of the housing 400.

For example, as illustrated in FIG. 11, the master BMS 300 may be disposed on one internal surface of the plate 410 constituting the housing 400. That is, the master BMS 300 may be installed in a state of being embedded in the plate 410. In this case the plurality of antennas 311 may be jointly disposed on one internal surface of the plate 410 of the housing 400 in which the master BMS 300 is disposed. However, positions at which the plurality of antennas 311 are disposed are not limited thereto, and positions at which the plurality of antennas 311 are disposed with respect to the housing 400 may be determined depending on a propagation environment inside the battery pack 1.

The multiple antennas 310 may include a plurality of antennas 311 disposed at different positions with respect to the housing 400. According to an exemplary embodiment, the plurality of antennas 311 included in the multiple antennas 310 may be implemented in a form of chips disposed inside or outside the housing 400.

According to an exemplary embodiment, the plurality of antennas 311 may be disposed on one internal surface of the plate 410 constituting the housing 400. For example, as illustrated in FIG. 11, the multiple antennas 310 may include eight antennas 311-1 to 311-8, and all of eight antennas 311-1 to 311-8 may be disposed on one surface of the plate 410. Here, one surface of the plate 410 is a surface facing the internal space of the housing 400. In this case, eight antennas 311-1 to 311-8 may be disposed at different positions not to overlap with each other on one surface of the plate 410. However, the number and the positions of the plurality of antennas 311 are not limited thereto, and as necessary, may be freely changed.

According to an exemplary embodiment, the number of the plurality of antennas 311 included in the multiple antennas 310 may be determined depending on the propagation environment inside the battery pack 1. For example, when the propagation environment inside the battery pack 1 is excellent, two antennas may be included in the multiple antennas 310. On the other hand, when the propagation environment inside the battery pack 1 is not excellent, eight antennas 311-1 to 311-8 may also be included in the multiple antennas 310. That is, as the propagation environment inside the battery pack 1 is more excellent, the number of antennas included in the multiple antennas 310 decreases.

A plurality of connection portions 312 which are used for connecting the plurality of antennas 311 included in the multiple antennas 310 and the master BMS 300 may wiredly connect the plurality of antennas 311 to the plurality of wireless ports of the master BMS 300, respectively. According to an exemplary embodiment, the plurality of connection portions 312 may be implemented as an RF coaxial cable.

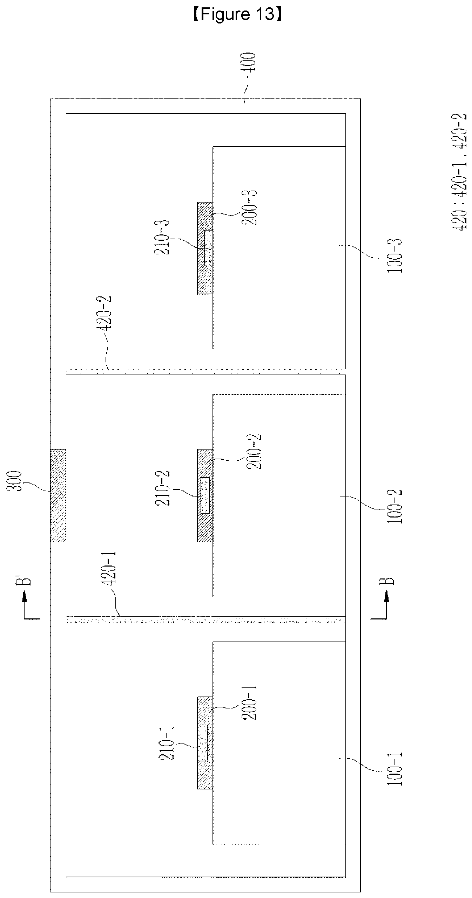

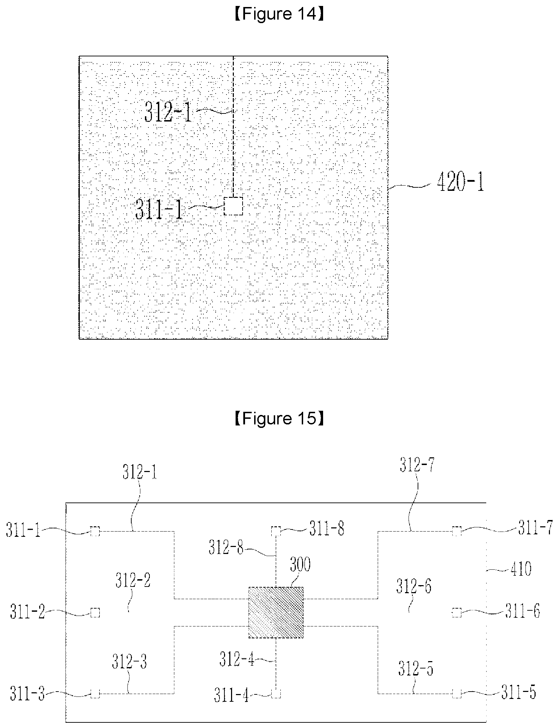

FIG. 13 is a cross-sectional view of the battery pack 1 according to an exemplary embodiment of the present invention, and FIG. 14 is a diagram illustrating a state of the battery pack 1 of FIG. 13 taken along line B-B'.

Referring to FIG. 13, the housing 400 according to an exemplary embodiment of the present invention may include a plurality of spaces which separately accommodate the plurality of battery modules 100-1 to 100-6, respectively. In this case, the plurality of spaces inside the housing 400 may be formed through partitions 420 (420-1 and 420-2).

Referring to FIG. 14, the plurality of antennas 311 included in the multiple antennas 310 according to an exemplary embodiment of the present invention may be disposed at a portion of the partition 420-1 formed inside the housing 400. That is, the plurality of antennas 311 included in the multiple antennas 310 may also be disposed in the internal space of the housing 400 in addition to the plate 410 constituting one surface of the housing 400. In this case, the plurality of antennas 311 disposed at a portion of the partition 420-1 may be implemented to be positioned on one surface of the partition 420-1, and revealed to the outside, or in a form of being embedded in the partition 420-1 (e.g., a chip form).

FIGS. 10 to 14 exaggeratively express a state of the battery pack according to an exemplary embodiment of the present invention for convenience of description.

In FIGS. 10, 12, and 13, it is illustrated that there are empty spaces between the plurality of battery modules 100-1 to 100-6 accommodated inside the housing, but this is exaggeratively expressed for convenience of description, and the present invention is not limited thereto, and may be freely changed as necessary. For example, the empty space between the plurality of battery modules 100-1 to 100-6 may be filled with a specific structure, or also be accommodated inside the housing 400 so that there is no empty space between the plurality of battery modules 100-1 to 100-6.

Further, in FIGS. 10, 12, and 13, it is illustrated that there are empty spaces between the plurality of battery modules 100-1 to 100-6 and the housing 400, and the plurality of battery modules 100-1 to 100-6 and the partitions 410-1 and 410-2, but this is exaggeratively expressed for convenience of description, and the present invention is not limited thereto, and may be freely changed as necessary. For example, the plurality of battery modules 100-1 to 100-6 may be accommodated in the internal space of the housing 400 so that there is no empty space.

FIGS. 15 to 19 illustrate various exemplary embodiments illustrating a layout structure between the multiple antennas 310, the master BMS 300, and a plurality of connection portions 312 according to an exemplary embodiment of the present invention.

As illustrated in FIGS. 15 to 19, the battery pack 1 according to an exemplary embodiment of the present invention may have various exemplary embodiments according to the number of the plurality of antennas 311 included in the multiple antennas 310 and positions at which the plurality of antennas 311 are disposed with respect to the housing 400, respectively.

For example, as illustrated in FIG. 15, the multiple antennas 310 according to an exemplary embodiment of the present invention may include eight antennas 311-1 to 311-8, and all of the eight antennas 311-1 to 311-8 may be disposed on the plate 410 constituting one surface of the housing 400 jointly with the master BMS 300. In this case, the master BMS 300 may be implemented in the chip form, and installed in a state of being embedded at a center of the plate 410, and eight respective antennas 311-1 to 311-8 may be disposed to be spaced along an outer circumferential surface of the plate 410, and eight antennas 311-1 to 311-8 may be connected to the master BMS 300 through the plurality of connection portions 312-1 to 312-8, respectively.

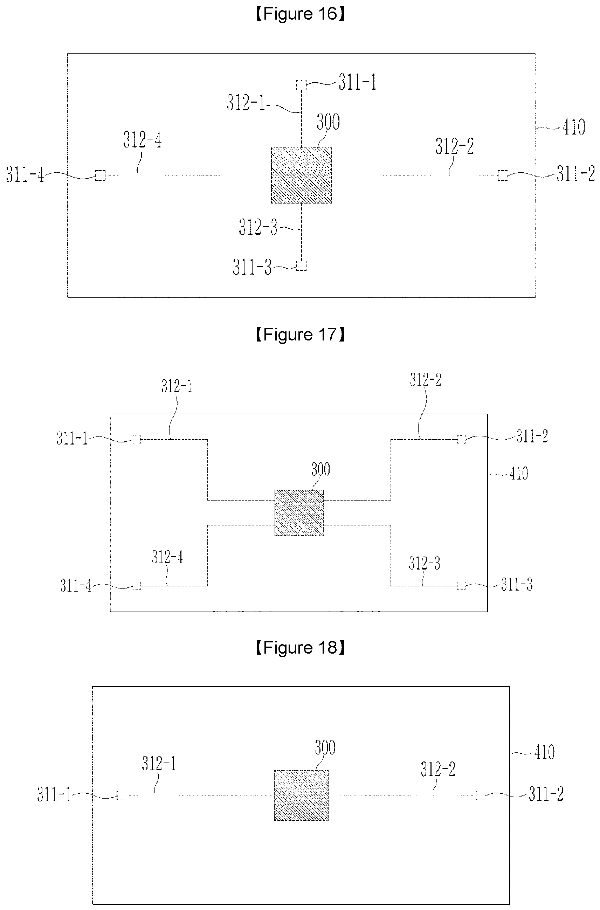

Alternatively, as illustrated in FIG. 16, the multiple antennas 310 according to an exemplary embodiment of the present invention may include four antennas 311-1 to 311-4, and may be disposed on the plate 410 constituting one surface of the housing 400 jointly with the master BMS 300. In this case, the master BMS 300 may be implemented in the chip form, and disposed at the center of the plate 410, and four antennas 311-1 to 311-4 may be disposed to face respective surfaces of the master BMS 300. In this case, four antennas 311-1 to 311-4 may be connected to the master BMS 300 through the plurality of connection portions 312-1 to 312-4, respectively.

Alternatively, as illustrated in FIG. 17, the multiple antennas 310 according to an exemplary embodiment of the present invention may include four antennas 311-1 to 311-4, and may be disposed on the plate 410 constituting one surface of the housing 400 jointly with the master BMS 300. In this case, the master BMS 300 may be implemented in the chip form, and disposed at the center of the plate 410, and four antennas 311-1 to 311-4 may be disposed to correspond to respective corners of the plate 410, and four antennas 311-1 to 311-4 may be connected to the master BMS 300 through the plurality of connection portions 312-1 to 312-4, respectively.

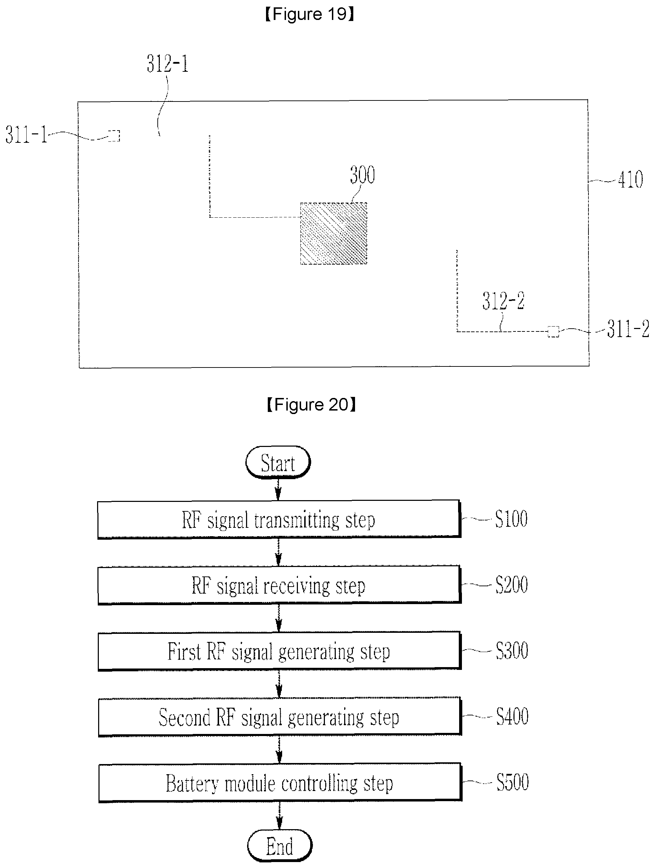

Alternatively, as illustrated in FIGS. 18 and 19, the multiple antennas 310 according to an exemplary embodiment of the present invention may include two antennas 311-1 and 311-2, and may be disposed on the plate 410 constituting one surface of the housing 400 jointly with the master BMS 300, and may be connected to the master BMS 300 through two connection portions 312-1 and 312-2.

FIG. 20 is a flowchart of a method for monitoring a battery pack using a battery system according to an exemplary embodiment of the present invention.

Referring to FIG. 20, a method for monitoring a battery pack using a battery system according to an exemplary embodiment of the present invention may include a wireless signal transmitting step S100, a wireless signal receiving step S200, a first wireless signal generating step S300, a second wireless signal generating step S400, and a battery module controlling step S500.

In the wireless signal transmitting step S100, a slave BMS 200 may sense a state of a battery module 100 and generate sensing information, and transmit the sensing information through an antenna 210 as a wireless signal.

In the wireless signal receiving step S200, a master BMS 300 may receive a wireless signal through multiple antennas 310 as a plurality of wireless signals.

Here, the multiple antennas 310 may include antennas 310-1, 310-2, ..., 310-N more than antennas 210 included in the slave BMS 200.

In the first wireless signal generating step S300, the master BMS 300 adjusts phases for the plurality of wireless signals to generate a plurality of first wireless signals having the same phase.

According to an exemplary embodiment, the first wireless signal generating step S300, based on a phase of a wireless signal received by any one antenna 310-n among the antennas 310-1, 310-2, ..., 310-N of the multiple antennas 310 by a phase shifter 320, may further include a step S311 of generating the plurality of first wireless signals having the same phase, and a step S312 of transmitting, by the phase shifter 320, the plurality of first wireless signals to a signal synthesizer 330, by adjusting the phases of the plurality of wireless signals received by the remaining antennas (all except for 310-n) to generate the plurality of first wireless signals.

According to an exemplary embodiment, the first wireless signal generating step S300 may further include a step S321 of generating the plurality of first wireless signals having the same phase by adjusting phases for the plurality of wireless signals to a predetermined reference phase, and a step S322 of transmitting, by the phase shifter 320, the plurality of first wireless signals to the signal synthesizer 330.

In the second wireless signal generating step S400, the master BMS 300 synthesizes the plurality of first wireless signals to generate a second wireless signal.

According to an exemplary embodiment, the second wireless signal generating step S400 may further include a step S411 of receiving, by the signal synthesizer 330, the plurality of first wireless signals, and synthesizing the plurality of first wireless signals to generate the second wireless signal, and a step S412 of generating the second wireless signal and transmitting the generated second wireless signal to a controller 340.

According to an exemplary embodiment, the second wireless signal generating step S400 may further include, when there are a plurality of slave BMSs 200, a step S421 of distinguishing the plurality of first wireless signals for each slave BMS 200, and a step S422 of synthesizing the plurality of first wireless signals distinguished for each slave BMS 200.

In the battery module controlling step S500, the sensing information may be obtained by using the second wireless signal, and the battery module 100 may be controlled by using the obtained sensing information.

While the exemplary embodiments of the present invention have been described above in detail, it is to be understood that the scope of the present invention is not limited to the disclosed exemplary embodiments, but, on the contrary, is intended to cover various modifications and equivalent arrangements included within the spirit and scope of the appended claims.

## Claims

1. A battery system comprising:
a battery module;
a slave battery management system BMS including an antenna, connected to the battery module, sensing a state of the battery module and generating sensing information, and transmitting the sensing information through the antenna as a wireless signal; and
a master BMS including multiple antennas, receiving the wireless signal through the multiple antennas as a plurality of wireless signals, adjusting phases for the plurality of wireless signals and generating a plurality of first wireless signals, synthesizing the plurality of first wireless signals and generating a second wireless signal, obtaining the sensing information by using the second wireless signal, and controlling the battery module by using the obtained sensing information.

2. The battery system of claim 1, wherein:
the plurality of first wireless signals have the same phase as each other.

3. The battery system of claim 1, wherein:
the master BMS further includes,
a phase shifter adjusting, based on a phase of a wireless signal received by any one antenna among the antennas of the multiple antennas, phases of a plurality of wireless signals received by the remaining antennas to generate the plurality of first wireless signals.

4. The battery system of claim 1, wherein:
the master BMS further includes,
a phase shifter generating the plurality of first wireless signals by adjusting the phases for the plurality of wireless signals based on a predetermined reference phase.

5. The battery system of claim 1, wherein:
the master BMS further includes,
a signal synthesizer receiving the plurality of first wireless signals, synthesizing the plurality of first wireless signals to generate a second wireless signal, and transmitting the second wireless signal to a controller.

6. The battery system of claim 1, wherein:
when there are the plurality of slave BMSs,
the master BMS further includes,
a signal synthesizer separately synthesizes the plurality of first wireless signals for each slave BMS.

7. A battery pack embedded with a battery system, comprising:
a housing accommodating a plurality of battery modules and a plurality of slave BMSs;
multiple antennas including a plurality of antennas disposed at different positions with respect to the housing;
a master BMS including a plurality of wireless ports, and disposed at a portion of the housing; and
a plurality of connection portions wiredly connecting the plurality of antennas to the plurality of wireless ports, respectively.

8. The battery pack of claim 7, wherein:
the master BMS and the plurality of antennas,
are disposed on one internal surface of a plate constituting one surface of the housing.

9. The battery pack of claim 7, wherein:
the housing includes,
a partition partitioning a space accommodating the plurality of battery modules.

10. The battery pack of claim 9, wherein:
the multiple antennas are disposed at a portion of the partition.

11. The battery pack of claim 7, wherein:
the number of the plurality of antennas is determined depending on a propagation environment inside the battery pack.

12. A battery pack monitoring method using a battery system, the method comprising:
sensing, by a slave BMS, a state of a battery module and generating sensing information, and transmitting the sensing information through an antenna as a wireless signal;
receiving, by a master BMS, the wireless signal through multiple antennas as a plurality of wireless signals;
adjusting, by the master BMS, phases for the plurality of wireless signals, and generating a plurality of first wireless signals having the same phase;
synthesizing, by the master BMS, the plurality of first wireless signals to generate a second wireless signal; and
obtaining the sensing information by using the second wireless signal, and controlling the battery module by using the obtained sensing information.

13. The method of claim 12, wherein:
the generating of the first wireless signals further includes,
adjusting, by a phase shifter, based on a phase of a wireless signal received by any one antenna among the antennas of the multiple antennas, phases of a plurality of wireless signals received by the remaining antennas to generate the plurality of first wireless signals having the same phase, and
transmitting, by the phase shifter, the plurality of first wireless signals to a signal synthesizer.

14. The method of claim 12, wherein:
the generating of the first wireless signals further includes,
generating, by the phase shifter, the plurality of first wireless signals having the same phase by adjusting the phases for the plurality of wireless signals based on a predetermined reference phase, and
transmitting, by the phase shifter, the plurality of first wireless signals to the signal synthesizer.

15. The method of claim 12, wherein:
the generating of the second wireless signal further includes,
receiving, by the signal synthesizer, the plurality of first wireless signals, synthesizing the plurality of first wireless signals to generate the second wireless signal, and
generating the second wireless signal and transmitting the generated second wireless signal to a controller.

16. The method of claim 12, wherein:
when there are the plurality of slave BMSs,
the generating of the second wireless signal further includes,
distinguishing the plurality of first wireless signals for each slave BMS, and
synthesizing the plurality of first wireless signals distinguished for each slave BMS.
